Europäisches Patentamt

**European Patent Office**

**Office européen des brevets**

(19)

(11)　**EP 1 197 067 B1**

(12)　**EUROPÄISCHE PATENTSCHRIFT**

(45) Veröffentlichungstag und Bekanntmachung des Hinweises auf die Patenterteilung:
**02.01.2003　Patentblatt 2003/01**

(51) Int Cl.⁷: $H04N\ 1/407$

(21) Anmeldenummer: **00945566.8**

(22) Anmeldetag: **25.05.2000**

(86) Internationale Anmeldenummer:
**PCT/DE00/01689**

(87) Internationale Veröffentlichungsnummer:
**WO 00/078036 (21.12.2000 Gazette 2000/51)**

(54) **VERFAHREN UND SCHALTUNGSANORDNUNG ZUR KONTRASTVERBESSERUNG EINES BILDES**

METHOD AND CIRCUIT SYSTEM FOR IMPROVING IMAGE CONTRAST

PROCEDE ET CIRCUIT POUR L'AMELIORATION DU CONTRASTE D'UNE IMAGE

(84) Benannte Vertragsstaaten:
**DE**

(30) Priorität: **15.06.1999　DE 19927295**

(43) Veröffentlichungstag der Anmeldung:
**17.04.2002　Patentblatt 2002/16**

(73) Patentinhaber: **Infineon Technologies AG
81669 München (DE)**

(72) Erfinder: **SCHU, Markus
D-85435 Erding (DE)**

(74) Vertreter: **Banzer, Hans-Jörg, Dipl.-Ing.
Kraus & Weisert
Patent- und Rechtsanwälte
Thomas-Wimmer-Ring 15
80539 München (DE)**

(56) Entgegenhaltungen:
**EP-A- 0 723 364　　　　EP-A- 0 798 919
US-A- 5 862 254**

- **KIM Y -T: "CONTRAST ENHANCEMENT USING BRIGHTNESS PRESERVING BI-HISTOGRAM EQUALIZATION" IEEE TRANSACTIONS ON CONSUMER ELECTRONICS,US,IEEE INC. NEW YORK, Bd. 43, Nr. 1, 1. Februar 1997 (1997-02-01), Seiten 1-8, XP000703850 ISSN: 0098-3063 in der Anmeldung erwähnt**

## Beschreibung

Die vorliegende Erfindung betrifft ein Verfahren und eine Schaltungsanordnung zur automatischen Kontrastverbesserung eines Bildes nach dem Oberbegriff des Anspruches 1 bzw. des Anspruches 20.

Häufig wird bei digitalisierten Bildern nicht der gesamte zur Verfügung stehende Dynamikbereich, d.h. die maximal mögliche Auflösung der Helligkeitswerte, ausgenützt, was jedoch einen geringeren Kontrast des Bildes zur Folge hat. Dies trifft beispielsweise insbesondere auf ältere Bildvorlagen (Schwarz/Weiß-Spielfilme etc.) zu. Dadurch wirken die Bilder bei ihrer Wiedergabe unscharf, dunkel und matt.

Bekannte Verfahren zur Verbesserung des Kontrasts basieren auf der Dichteverteilung der Bildpunkte (Pixel) im Bild und spreizen den Dynamikbereich des Bildes, wodurch das entsprechende Bild brillanter und schärfer wirkt. Ein Beispiel hierfür ist die sogenannte Histogrammspreizung, deren Ziel es ist, eine möglichst flache Dichteverteilung im Bild zu erzeugen, was einem relativ großen Kontrast entspricht. Mathematisch wird in diesem Fall die Varianz/Streuung erhöht, wobei der Kontrast proportional zur Varianz/Streuung ist. Anwendungen der Histogrammspreizung finden sich insbesondere im Bereich der Medizin und der Radarbildverarbeitung.

Nachfolgend soll kurz das Prinzip der Histogrammspreizung näher erläutert werden. Jedes Bild besteht aus i Zeilen und j Spalten, so daß jeder Bildpunkt mit X(i,j) bezeichnet werden kann, wobei X(i,j) die Intensität des Bildes an der örtlichen Position i,j in Form eines diskreten Helligkeitswerts beschreibt. Das gesamte Bild kann demnach durch {X(i,j)} ausgedrückt werden. Im Falle eines 8bit-Auflösung sind insgesamt L = 256 diskrete Helligkeitsstufen möglich, die nachfolgend mit $x_0$, $x_1$ ... $x_{L-1}$ bezeichnet werden.

Für ein gegebenes Bild X ist dessen Dichtefunktion $p(x_k)$ wie folgt definiert:

$$(1) \qquad p(x_k) = \frac{n(x_k)}{N}$$

Dabei gilt k = 0, 1, 2 ... L-1, und N bezeichnet die Anzahl aller Pixel oder Bildpunkte im Eingangsbild X, während $n(x_k)$ die Anzahl derjenigen Bildpunkte bezeichnet, welche im Eingangsbild X den diskreten Helligkeitswert $x_k$ besitzen.

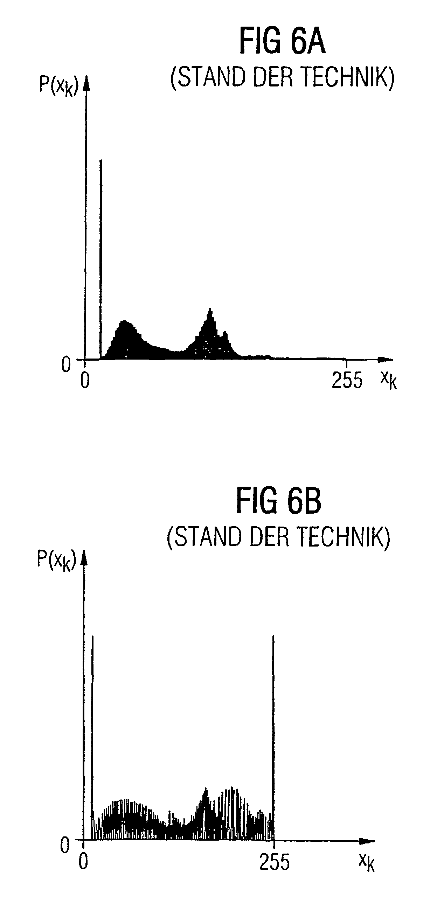

Die Darstellung der Dichtefunktion $p(x_k)$ über $x_k$ wird als Histogramm des Bildes X bezeichnet. In Fig. 6A ist beispielhaft die Dichtefunktion eines Bildes X dargestellt.

Die Summen-Dichte-Funktion eines Bildes X ist definiert als

$$(2) \qquad c(x_k) = \sum_{j=0}^{k} p(x_j)$$

Per Definition ist $c(x_{L-1})$ = 1. Die Summen-Dichte-Funktion $c(x_k)$ entspricht somit dem Integral über die Dichtefunktion $p(x_k)$.

Bei der Histogrammspreizung wird nunmehr unter Ausnützung der Summen-Dichte-Funktion das Eingangsbild in ein Ausgangsbild umgerechnet oder transformiert, wobei der gesamte Dynamikbereich ausgenützt wird. Die dabei verwendete Transformationsfunktion ist definiert als:

$$(3) \qquad f(x_k) = x_0 + (x_{L-1} - x_0) * c(x_k)$$

Das durch diese Transformation gewonnene transformierte Ausgangsbild Y = f(X) besitzt einen verbesserten Kontrast. In Fig. 6B ist die Dichtefunktion des auf diese Wiese verarbeiteten Ausgangsbilds dargestellt. Aus Fig. 6B ist insbesondere ersichtlich, daß das Ausgangsbild eine größere Streuung der Helligkeitswerte aufweist. D.h. durch die Histogrammspreizung wird eine flachere und breitere Helligkeitsdichteverteilung erzielt.

Das durch die Histogrammspreizung überarbeitete Bild besitzt jedoch nicht nur einen verbesserten Kontrast, sondern ist zudem deutlich heller als das Eingangsbild, was auch aus der in Fig. 6B gezeigten Dichtefunktion des Ausgangsbildes entnommen werden kann. Diese Tatsache ist ein Ergebnis der Histogrammspreizung, welche die Eingangswerte unabhängig von dem jeweiligen Eingansgwert mit Hilfe der Summen-Dichte-Funktion in einen entsprechenden Ausgangswert umrechnet oder transformiert. Besonders auffällig wird die unnatürliche Anhebung des Kontrasts beispielsweise in Boden- oder Himmelbereichen eines Bildes, was einer Übersteuerung des Wertebereichs des Ausgangsbildes entspricht. Mit Hilfe der Histogrammspreizung wird somit zwar der Kontrast erhöht, der Gesamteindruck des Bildes ist jedoch schlechter als beim ursprünglichen Eingangsbild, wobei der Grund hierfür u.a. auf der Tatsache beruht, daß die mittlere Helligkeit des Bildes in keinster Weise bei der Berechnung berücksichtigt wird. Aufgrund dieser Nachteile wird das zuvor vorgestellte Verfahren der Histogrammspreizung nur selten in Produkten der Unterhaltungselektronik, wie z.B. in Fernsehgeräten, eingesetzt.

In IEEE Transactions on Consumer Elelctronics, Vol. 43, No. 1, Februar 1997, "Contrast Enhancement Using Brightness Preserving Bi-Histogramm Equalization", Y.-T. Kim, wird ein weiterentwickeltes Verfahren zur Kontrastverbesserung basierend auf der Histogrammspreizung vorgeschlagen, wobei dieses Verfahren dem Stand der Technik nach dem Oberbegriff des Anspruches 1 entspricht. Das in dieser Druckschrift beschriebene Verfahren verwendet zwei unterschiedliche Histogrammspreizungen für zwei unterschiedliche Teilbilder, welche durch Zerlegung des Eingangsbilds in Bildpunkte mit einer Helligkeit größer bzw. kleiner als die mittlere Helligkeit des Eingangsbilds erhalten werden. Dieses Verfahren soll nachfolgend kurz näher erläutert werden.

Es sei zunächst angenommen, daß $x_m$ die mittlere Helligkeit des Eingangsbildes X bezeichnet. Das Eingangsbild kann demnach in zwei Teilbilder $X_L$ und $X_U$ mit $X = X_L \cup X_U$, $X_L = \{X(i,j)|X(i,j) \leq x_m, \forall X(i,j) \in X\}$ und $X_U = \{X(i,j)|X(i,j) > x_m, \forall X(i,j) \in X\}$ zerlegt werden. Das Teilbild $X_L$ umfaßt somit sämtliche Bildpunkte des Eingangsbildes X, welche eine geringere Helligkeit als oder eine gleich große Helligkeit wie die mittlere Helligkeit $x_m$ des Eingangsbildes aufweisen, während das Teilbild $X_U$ sämtliche Bildpunkte des Eingangsbildes X umfaßt, die eine größere Helligkeit als die mittlere Helligkeit $x_m$ besitzen. Für die beiden Teilbilder können die folgenden Dichtefunktionen definiert werden:

$$(4) \qquad p_L(x_k) = \frac{n_L(x_k)}{N_L}$$

Dabei bezeichnet $N_L$ die Gesamtanzahl der Pixel im Teilbild $X_L$ und $n_L(x_k)$ die Anzahl der Pixel mit dem Helligkeitswert $x_k$ im Teilbild $X_L$, wobei für das Teilbild $X_L$ gilt: $k = 0, 1 ... x_m$.

$$(5) \qquad p_U(x_k) = \frac{n_U(x_k)}{N_U}$$

Für das Teilbild $X_U$ bezeichnet auf analoge Art und Weise $N_U$ die Gesamtanzahl der Pixel im Teilbild $X_U$ und $n_U(x_k)$ die Anzahl der Pixel mit dem Helligkeitswert $x_k$ im Teilbild $X_U$, wobei für das Teilbild $X_U$ gilt: $k = x_{m+1}, ... x_{L-1}$. Ebenso können entsprechende Summen-Dichte-Funktionen für die beiden Teilbilder $X_L$ und $X_U$ wie folgt definiert werden:

$$(6) \qquad c_L(x_k) = \sum_{j=0}^{k} p_L(x_j)$$

$$(7) \qquad c_U(x_k) = \sum_{j=0}^{k} p_U(x_j)$$

Definitionsgemäß muß gelten: $c_L(x_m) = 1$ und $c_U(x_{L-1}) = 1$. Für die beiden Teilbilder werden nunmehr separate Transformationsfunktionen $f_L(x_k)$ und $f_U(x_k)$ definiert:

$$(8) \qquad f_L(x_k) = x_0 + (x_m - x_0)*c_L(x_k)$$

$$(9) \qquad f_U(x_k) = x_{m+1} + (x_{L-1} - x_{m+1})*c_U(x_k)$$

Die Helligkeitswerte der beiden Teilbilder $X_L$ und $X_U$ werden somit mit Hilfe unterschiedlicher Transformationsfunktionen verarbeitet bzw. transformiert, wobei die transformierten Teilbilder zusammengesetzt das gewünschte Ausgangsbild Y mit verbessertem Kontrast ergeben:

$$(10) \qquad Y = f(X) = f_L(X_L) \cup f_U(X_U)$$

Durch dieses Verfahren wird das Eingangsbild X über den gesamten Dynamikbereich $[x_0, x_{L-1}]$ gespreizt, wobei die Randbedingung gilt, daß die Bildpunkte mit einer Helligkeit kleiner als oder gleich groß wie der mittlere Helligkeitswert $x_m$ im Bereich $[x_0, x_m]$ und die Bildpunkte mit einer Helligkeit größer als der mittlere Helligkeitswert im Bereich $[x_{m+1}, x_{L-1}]$ gespreizt werden.

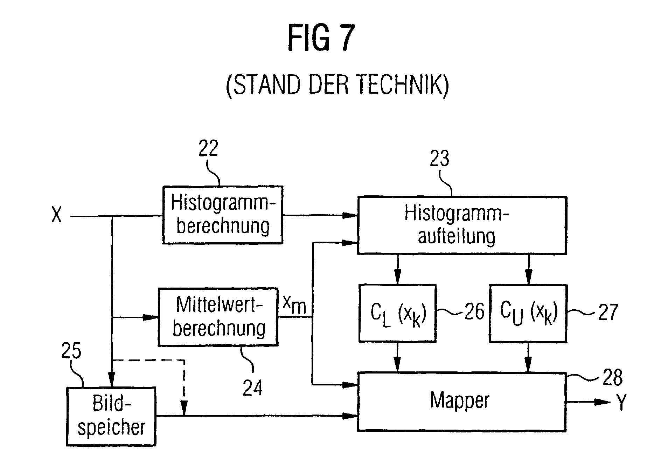

In Fig. 7 ist eine Schaltungsanordnung zur Realisierung dieses Verfahrens beschrieben, wobei das Eingangsbild X einer Einheit 22 zur Histogrammberechnung zugeführt wird. Des weiteren ist eine Einheit 24 zur Berechnung des mittleren Helligkeitswerts $x_m$ des Eingangsbildes X vorgesehen. Das zu dem Eingangsbild X ermittelte Histogramm wir in Abhängigkeit von dem berechneten Helligkeitsmittelwert $x_m$ in einer weiteren Einheit 23 entsprechend den Teilbilder $X_L$ und $X_U$ aufgeteilt. Berechnungseinheiten 26 und 27 sind vorgesehen, um für die beiden Teilbilder $X_L$ bzw. $X_U$ die entsprechenden Summen-Dichte-Funktionen $c_L(x_k)$ bzw. $c_U(x_k)$ zu berechnen. In einem Mapper 28 werden davon abhängig die zuvor beschriebenen Transformationsfunktionen $f_L(x_k)$ bzw. $f_U(xk)$ berechnet und die somit transformierten Teilbilder zu einem transformierten Ausgangsbild Y zusammengesetzt. Da die einzelnen Berechnungen während der Dauer eines Bilds durchgeführt werden müssen, ist ein Bildspeicher 25 erforderlich. Auf den in Fig. 7 gezeigten Bildspeicher 25 kann jedoch auch verzichtet werden, da zwischen zwei unmittelbar aufeinanderfolgenden Bildern eine hohe Korrelation besteht. Ebenso ist auch eine Quantisierung des Histogramms möglich.

Die zuvor diskutierte Druckschrift macht jedoch keinerlei Aussagen darüber, wie verschiedene im laufenden Bild auftretende Probleme, wie z.B. Pumpen des Bildes oder Schaltartefakte bei zu schneller oder zu langsamer Änderung der Kontrast- bzw. Transformationsfunktion, gelöst werden können. Ebenso wird nicht diskutiert, wie Bilder zu behandeln sind, welche bereits einen guten Kontrast aufweisen. Ebenso werden keinerlei Vorschläge für die tatsächliche Realisierung der Berechnung des Helligkeitsmittelwerts $x_m$ gemacht.

Der vorliegenden Erfindung liegt daher die Aufgabe zugrunde, ein verbessertes Verfahren swie eine entsprechende Schaltungsanordnung zur Kontrastverbesserung eines aus mehreren Bildpunkten bestehenden Bildes vorzuschlagen. Insbesondere soll es möglich sein, den Kontrast des Bildes u.a. in Abhängigkeit des bereits in dem Bild vorhandenen Kontrasts zu verbessern, wobei jedoch gewährleistet ist, daß der Gesamteindruck des verarbeiteten Ausgangsbildes mindestens genauso gut wie derjenige des ursprünglichen Eingangsbildes ist, und wobei zudem die zuvor beschriebenen Probleme beseitigt sind.

Diese Aufgabe wird erfindungsgemäß durch ein Verfahren mit den Merkmalen des Anspruches 1 bzw. eine Schaltungsanordnung mit den Merkmalen des Anspruches 20 gelöst. Die Unteransprüche definieren jeweils bevorzugte und vorteilhafte Ausführungsformen der vorliegenden Erfindung.

Auch erfindungsgemäß wird das Eingangsbild in Teilbilder unterteilt, wobei das erste Teilbild diejenigen Bildpunkte umfaßt, welche eine geringe Helligkeit als die mittlere Helligkeit des Eingangsbildes aufweisen, während das zweite Teilbild diejenigen Bildpunkte umfaßt, welche eine größere Helligkeit als die mittlere Helligkeit aufweisen. Analog zu dem zuvor beschriebenen Stand der Technik werden die Helligkeitswerte der beiden Teilbilder gemäß unterschiedlichen Transformationsfunktionen verarbeitet und die somit transformierten Helligkeitswerte zu einem kontrastverbesserten Ausgangsbild zusammengesetzt.

Erfindungsgemäß werden als Transformationsfunktionen jedoch Geradenfunktionen mit variablen Steigungsfaktoren verwendet, wobei die Steigungsfaktoren jeweils aufgrund einer Analyse des Ausgangsbildes ermittelt werden. Auf diese Weise kann bei der Festlegung der Transformationsfunktionen der in dem augenblicklichen Bild enthaltene Kontrast berücksichtigt werden. Insbesondere wird für das erste Teilbild als Transformationsfunktion die Funktion $f_L(x_k) = x_m + (x_k - x_m)^*a_L$ verwendet, während für das zweite Teilbild als Transformationsfunktion die Funktion $f_U(x_k) = x_m + (x_k - x_m)^*a_U$ verwendet wird, wobei $x_m$ den mittleren Helligkeitswert, $x_k$ den jeweils zu verarbeitenden Helligkeitswert, $a_L$ den Steigungfaktor der Transformationsfunktion $f_L(x_k)$ und $a_U$ den Steigungsfaktor der Transformationsfunktion $f_U(x_k)$ bezeichnet. Anstelle einer aufwendigen Berechnung der Summen-Dichte-Funktionen, wie sie bei dem eingangs beschriebenen Stand der Technik erforderlich ist, ist somit erfindungsgemäß lediglich die Berechnung zweier Steigungsfaktoren notwendig.

Bei der Berechnung des Werts der mittleren Helligkeit des Eingangsbildes sowie der beiden Steigungsfaktoren wird berücksichtigt, daß aufeinanderfolgende Bilder eine hohe Korrelation aufweisen, so daß auf einen Bildspeicher zum Zwischenspeichern des Eingangsbildes verzichtet werden kann. Die Ergebnisse der Berechnung des Helligkeitsmittelwerts sowie der Steigungsfaktoren stehen dem Mapper jeweils für das darauffolgende Bild zur Verfügung.

Für die Berechnung der mittleren Helligkeit sowie der Steigungsfaktoren der beiden Transformationsfunktionen werden Vorschläge gemacht, welche gewährleisten, daß die mittlere Helligkeit beibehalten wird und die Bildqualität auch nach der Kontrastverbesserung mindestens genauso gut wie die des Eingangsbildes ist. Übersteuerungsartefakte, Schaltartefakte und Pumpartefakte können bei der erfindungsgemäßen Kontrastverbesserung zuverlässig vermieden werden.

Die Erfindung wird nachfolgend anhand eines bevorzugten Ausführungsbeispiels unter Bezugnahme auf die Zeichnung näher erläutert.

Fig. 1 zeigt ein vereinfachtes Blockschaltbild einer erfindungsgemäßen Schaltungsanordnung gemäß einem bevorzugten Ausführungsbeispiel zur Kontrastverbesserung eines Eingangsbildes.

Fig. 2 zeigt eine Darstellung zur Erläuterung der gemäß Fig. 1 verwendeten Transformationsfunktionen.

Fig. 3 zeigt den Aufbau einer in Fig. 1 gezeigten Einheit zur Berechnung des Helligkeitsmittelwerts.

Fig. 4A und 4B zeigen Darstellungen zur Erläuterung der Funktionsweise der in Fig. 3 gezeigten Einheit zur Berechnung des Helligkeitsmittelwerts.

Fig. 5 zeigt den Aufbau von in Fig. 1 gezeigten Einheiten zur Ermittlung der Steigungsfaktoren der Transformationsfunktionen.

Fig. 6A und 6B zeigen Darstellungen zur Erläuterung der Wirkungsweise der herkömmlichen Histogrammspreizung.

Fig. 7 zeigt ein vereinfachtes Blockschaltbild einer Schaltungsanordnung zur Realisierung der Kontrastverbesserung eines Eingangsbildes gemäß dem Stand der Technik.

Auch gemäß der vorliegenden Erfindung wird die mittlere Helligkeit beibehalten, d.h. ein Bildpunkt, der eine der mittleren Helligkeit des Eingangsbildes entsprechende Helligkeit besitzt, verändert bei Anwendung der erfindungsgemäßen Kontrastverbesserung nicht seine Helligkeit. Als Transformationsfunktionen werden im Rahmen der vorliegenden Erfindung Geradenfunktionen mit variablen Steigungsfaktoren verwendet, wobei sich die beiden Geradenfunktionen insbesondere im mittleren Helligkeitswert $x_m$ schneiden und durch folgende Funktionen definiert sein können:

$$(10) \qquad f_L(x_k) = x_m + (x_k - x_m)^*a_L | x_k \leq x_m$$

$$(11) \qquad f_U(x_k) = x_m + (x_k - x_m)^*a_U | x_k \geq x_m$$

Dabei bezeichnet $x_m$ den mittleren Helligkeitswert, $x_k$ den jeweils zu verarbeitenden Helligkeitswert des Teilbildes $X_L$ bzw. $X_U$, $a_L$ den Steigungfaktor der Transformationsfunktion $f_L(x_k)$ und $a_U$ den Steigungsfaktor der Transformationsfunktion $f_U(x_k)$. Die Transfor-

mationsfunktion $f_L(x_k)$ wird ausschließlich auf die Bildpunkte des Teilbildes $X_L$ angewendet, welches lediglich Bildpunkte mit Helligkeitswerten kleiner als oder gleich groß wie der Wert der mittleren Helligkeit $x_m$ aufweist ($x_k \leq x_m$). Des weiteren wird die Transformationsfunktion $f_U(x_k)$ ausschließlich auf die Bildpunkte des Teilbilds $X_U$ angewendet, welches lediglich Bildpunkte mit Helligkeitswerten größer als der Wert der mittleren Helligkeit $x_m$ aufweist ($x_k \geq x_m$). Bezüglich der Definition der Teilbilder $X_L$ und $X_U$ kann an dieser Stelle zur Vermeidung von Wiederholungen auf die Ausführungen zum Stand der Technik verwiesen werden, da diese analog auf die vorliegende Erfindung zutreffen.

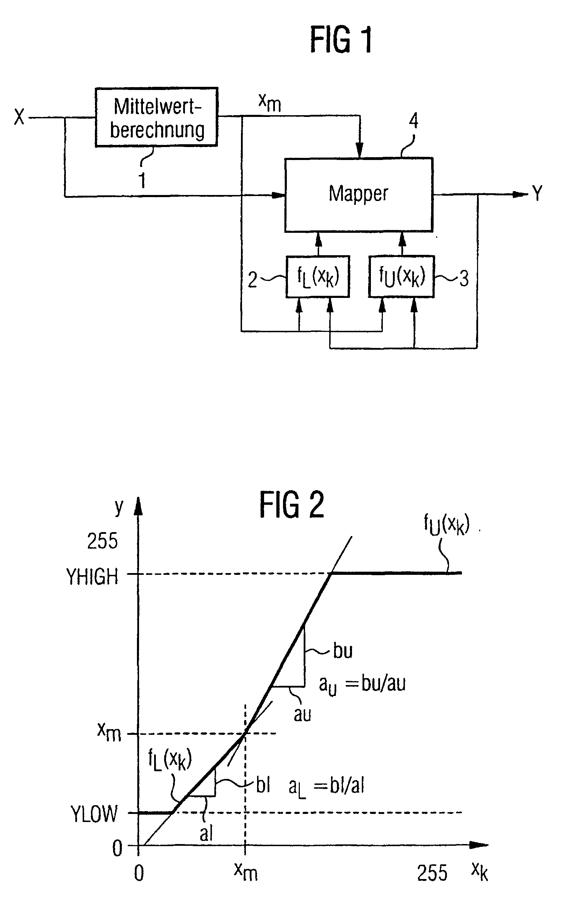

In Fig. 2 ist der Verlauf der beiden Transformationsfunktionen dargestellt, wobei zudem jeweils die Steigungsdreiecke eingezeichnet sind, so daß sich die Steigung $a_L$ der Transformationsfunktion $y = f_L(x_k)$ mit $a_L$ = bl/al und die Steigung $a_U$ der Transformationsfunktion $y = f_U(x_k)$ mit $a_U$ = bu/au ergibt. Ebenso ist aus Fig. 2 ersichtlich, daß sich die beiden Transformationsfunktionen im Schnittpunkt ($x_m,x_m$) schneiden. Die transformierten Helligkeitswerte y werden auf einen Maximalwert YHIGH und einen Minimalwert YLOW begrenzt, so daß die transformierten Helligkeitswerte des Ausgangsbildes $Y = f(X) = f_L(x_k) \cup f_U(x_k)$ lediglich Werte des Wertebereichs [YLOW,YHIGH] annehmen können.

Die oben beschriebenen Funktionen gemäß den Formeln (10) und (11) können im Prinzip auch aus den Formeln (8) bzw. (9) hergeleitet werden, wenn folgende Beziehungen vorausgesetzt werden:

$$(12) \qquad c_L(x_k) = 1 - \frac{(x_m - x_k)}{(x_m - x_0)} * a_L$$

$$(13) \qquad c_U(x_k) = \frac{(x_k - x_{m+1})}{(x_{L-1} - x_{m+1})} * a_U$$

Anstelle der Berechnung der Summen-Dichte-Funktionen $c_L(x_k)$ und $c_U(x_k)$ ist jedoch erfindungsgemäß nurmehr die Berechung der beiden Steigungswerte $a_L$ und $a_U$ erforderlich, so daß sich der Berechnungsaufwand deutlich reduziert.

In Fig. 1 ist ein vereinfachtes Blockschaltbild einer Schaltungsanordnung zur Realisierung des zuvor beschriebenen Verfahrens dargestellt. Ein zu verarbeitendes Eingangsbild X wird einer Einheit 1 zur Mittelwertberechnung zugeführt. Diese Einheit ermittelt den Wert $x_m$ der mittleren Helligkeit des Eingangsbildes X in Übereinstimmung mit einem noch nachfolgend näher beschriebenen Algorithmus. Des weiteren sind Einheiten 2 und 3 vorgesehen, welche in Abhängigkeit von dem Helligkeitsmittelwert $x_m$ sowie bestimmter Eigenschaften des Ausgangsbildes Y die Steigungsfaktoren $a_L$ bzw. $a_U$, d.h. die Transformationsfunktionen $f_L(x_k)$ bzw. $f_U(x_k)$, ermitteln und einem Mapper 4 mitteilen. Die Steigungsfaktoren $a_L$ und $a_U$ werden somit aus dem Ausgangsbild Y berechnet, was einer Regelung entspricht. Der Mapper 4 unterzieht in Übereinstimmung mit den Transformationsfunktionen $f_L(x_k)$ und $f_U(x_k)$ die Helligkeitswerte des Eingangsbildes X bzw. der beiden Teilbilder $X_L$ und $X_U$ einer Transformation und gibt das transformierte Ausgangsbild Y aus.

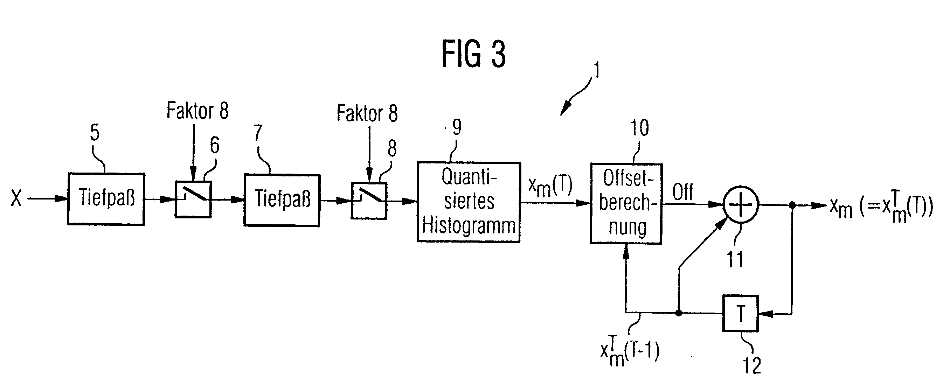

Nachfolgend soll die Berechnung des Helligkeitsmittelwerts $x_m$ durch die Einheit 1 erläutert werden, wobei in Fig. 3 eine mögliche Realisierung dieser Mittelwert-Berechnungseinheit 1 dargestellt ist.

Bei der Berechnung des Mittelwerts wird zwischen einem örtlichen Mittelwert und einem zeitlichen Mittelwert unterschieden. Der örtliche Mittelwert wird für jedes Eingangsbild X berechnet, indem das Eingangsbild tiefpaßgefiltert und anschließend mit dem Faktor 8 unterabgetastet wird. Dies erfolgt gemäß Fig. 3 zweimal, wobei hierzu zwei Tiefpaßfilter 5, 7 und zwei Unterabtastungseinrichtungen 6, 8 vorgesehen sind. Durch diesen Vorgang wird die Anzahl der Bildpunkte insgesamt um den Faktor 64 reduziert. Aus den somit verbliebenen Bildpunkten wird mit Hilfe einer entsprechenden Einheit 9 ein quantisiertes Histogramm berechnet, d.h. die Einheit 9 ermittelt eine quantisierte Helligkeitsverteilung des reduzierten Eingangsbildes. Von der Einheit 9 wird dabei die folgende quantisierte Dichtefunktion $p_Q(x_q)$ verwendet, wobei $x_q$ die unterschiedlichen quantisierten Helligkeitswerte und q die Nummer der jeweiligen Quantisierungsstufe bezeichnet und davon ausgegangen wird, daß jede Quantisierungsstufe 32 Helligkeitswerte $x_k$ umfaßt.

$$(14) \qquad p_Q(x_q) = \sum_{l=32*q}^{(q+1)*32-1} p(x_l)$$

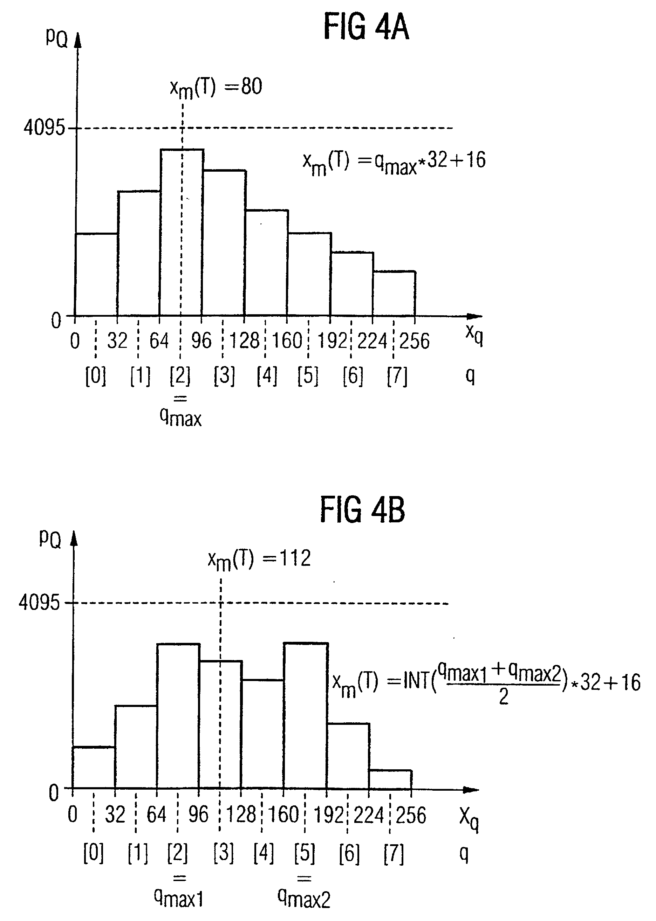

In Fig. 4A ist ein Beispiel eines entsprechenden quantisierten Histogramms für den Fall einer 8 bit-Auflösung mit 256 unterschiedlichen Helligkeitswerten (L =256) und acht unterschiedlichen Quantisierungsstufen (q = 0, 1 ... 7) dargestellt.

Anhand des quantisierten Histogramms wird nunmehr der örtliche Mittelwert gemäß der Formel $x_m$(T) = $q_{max}*32+16$ (oder allgemein $x_m$(T) = $q_{max}*(L/q) + L/(2q)$) berechnet. Dabei bezeichnet $q_{max}$ diejenige Quantisierungsstufe, die in dem quantisierten Histogramm den Balken mit dem maximalen Wert aufweist. Bei dem in Fig. 4A gezeigten beispielhaften quantisierten Histogramm ist somit $q_{max}$ = 2, so daß sich für den örtlichen Mittelwert $x_m$(T) der Wert 80 ergibt. Besitzen hingegen mehrere Balken den Maximalwert, wird zur Berechnung von $x_m$(T) der abgerundete Mittelwert der Nummern der entsprechenden Quantisierungsstufen verwendet, d.h. bei dem im Fig. 4B gezeigten Beispiel wird in der zuvor beschriebenen Formel für $x_m$(T) als $q_{max}$ der Wert INT((2+5)/2) = 3 verwendet.

Wie in Fig. 3 gezeigt ist, wird nach Ermittlung des örtlichen Mittelwerts $x_m$(T) durch Vergleich dieses Werts mit dem zeitlichen Mittelwert des vorhergehenden Bildes ein Offsetwert Off berechnet. Zu diesem Zweck ist eine entsprechende Einheit 10 vorgesehen, die in Abhängigkeit von dem örtlichen Mittelwert $x_m(T)$ des augenblicklichen Bildes und dem zeitlichen Mittelwert $x^T_m(T-1)$ des vorhergehenden Bildes den Offsetwert derart wählt, daß gilt $x_m = x^T_m(T) = x^T_m(T-1)+Off$. Der Offsetwert wird dabei von der Einheit 10 aus einer Menge {-OFFSET,..., -1, 0, 1, ..., OFFSET) ausgewählt, wobei der Parameter OFFSET frei programmierbar ist und derart gewählt wird, daß sich der zeitliche Mittelwert stets in Richtung des aktuellen örtlichen Mittelwerts bewegt. Insbesondere kann OFFSET = 1 gewählt werden, so daß für den Offsetwert Off lediglich die Werte -1, 0 und 1 in Frage kommen. Der auf diese Weise neu berechnete zeitliche (und örtliche) Mittelwert $x^T_m(T)$ des augenblicklichen Bildes wird als der gewünschte Helligkeitsmittelwert $x_m$ ausgegeben.

Durch die zuvor beschriebene Quantisierung des Histogramms einerseits und die Begrenzung der zeitlichen Änderung des Mittelwerts andererseits werden Schaltartefakte und Pumpartefakte vermieden.

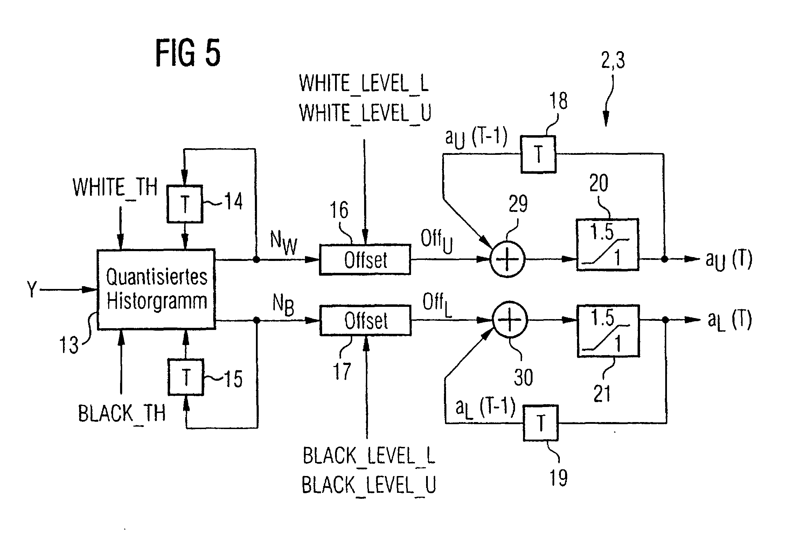

Die zur Durchführung des erfindungsgemäßen Kontrastverbesserungsverfahrens weiteren erforderlichen Parameter, nämlich die Steigungswerte $a_L$ und $a_U$, werden durch eine Analyse des von dem in Fig. 1 gezeigten Mapper 4 erzeugten Ausgangsbildes Y gewonnen, was einer Regelung dieser Steigungswerte gleichkommt. Eine entsprechende Schaltungsanordnung ist in Fig. 5 dargestellt, wobei die Funktionalität dieser Schaltungsanordnung den in Fig. 1 gezeigten Einheiten 2 und 3 zuzuordnen ist.

Ziel der in Fig. 5 gezeigten ausgangsseitigen Regelschleife muß es sein, bei kleinem Dynamikbereich des Eingangsbildes den Kontrast durch Spreizung des Dynamikbereichs zu verbessern, was mit einer Anhebung des Steigungsfaktors der entsprechenden Transformationsfunktion korreliert. Sobald der Kontrast sich verbessert hat, sollte die Steigung möglichst beibehalten werden. Bei "gutem" Kontrast, d.h. bei ausreichender Ausnutzung des Dynamikbereichs im Eingangsbild, sollte dagegen die Steigung möglichst den Wert 1 annehmen bzw. bei einem augenblicklichen Steigungswert größer als 1 dieser auf den Wert 1 heruntergeregelt werden.

Um das zuvor beschriebene Ziel zu realisieren, ist eine Einheit 13 zur Berechnung eines quantisierten Histogramms des Ausgangsbildes des Mappers 4 vorgesehen. Von diesem quantisierten Histogramm interessieren jedoch lediglich zwei Werte, nämlich die Werte $N_B$ und $N_W$, wobei $N_B$ die Anzahl der Bildpunkte des Ausgangsbildes Y repräsentiert, deren Helligkeit kleiner als oder gleich groß wie ein unteren Grenzwert BLACK_TH ist, während $N_W$ die Anzahl der Bildpunkte des Ausgangsbildes Y repräsentiert, deren Helligkeit größer als oder gleich groß wie ein oberer Grenzwert WHITE_TH ist. Im vorliegenden Ausführungsbeispiel beträgt BLACK_TH = 16 und WHITE_TH =240. Die Werte $N_B$ und $N_W$ sind ein Maß dafür, wie weit der Dynamikbereich am unteren bzw. oberen Ende des Wertebereichs ausgenützt wird. Die der Einheit 13 nachgeschalteten Schaltungselemente besitzen die Aufgabe, durch Auswertung dieser Werte die Anhebung bzw. Absenkung der Steigungsfaktoren $a_L$ und $a_U$ zu bestimmen, was nachfolgend näher erläutert wird.

Die Werte $N_B$ bzw. $N_W$ werden von Offsetwert-Ermittlungseinheiten 17 bzw. 16 jeweils mit einem weiteren unteren bzw. oberen Grenzwert BLACK_LEVEL_L und WHITE_LEVEL_L bzw. BLACK_LEVEL_U und WHITE_LEVEL_U verglichen, um davon abhängig einen entsprechenden Offsetwert $Off_L$ bzw. $Off_U$ zu bestimmen. Die Werte $Off_L$ und $OFF_U$ werden dabei jeweils aus der Menge {-OFFSET, 0, OFFSET} ausgewählt und anschließend mit Hilfe von Addiereinheiten 30 bzw. 29 zu dem entsprechenden Steigungswert des vorhergehenden Bildes addiert, welche über Verzögerungsglieder 19 bzw. 18 den Addiereinheiten 30 bzw. 29 zugeführt sind, so daß für den neuen Steigungsfaktor gilt:

$$(15) \qquad a_{L/U}(T)=a_{L/U}(T - 1) + Off_{L/U}$$

Durch diese Vorgehensweise werden Schaltartefakte und Pumpartefakte vermieden, wenn der Wert OFFSET genügend klein gewählt wird. Im vorliegenden Ausführungsbeispiel ist beispielsweise OFFSET = 128 gewählt.

Ist der Wert $N_B$ bzw. $N_W$ kleiner als der entsprechende untere Grenzwert BLACK_LEVEL_L bzw. WHITE_LEVEL_L, wird für $Off_L$ bzw. $Off_U$ der Wert +OFFSET gewählt und somit die Steigung erhöht, während für $Off_L$ bzw. $Off_U$ der Wert -OFFSET gewählt und somit die Steigung gesenkt wird, wenn $N_B$ bzw. $N_W$ größer als der entsprechende obere Grenzwert BLACK_LEVEL_U bzw. WHITE_LEVEL_U ist. In allen anderen Fällen wird für $Off_U$ und $Off_L$ der Wert 0 gewählt, so daß die Steigung der entsprechenden Transformationsfunktion unverändert bleibt.

Da die Bildqualität und damit der Kontrast des Ausgangsbildes niemals schlechter sein soll als diejenige des Eingangsbildes, ist in dem Ausgangspfad der Einheit 2 bzw. 3 jeweils eine Steigungsbegrenzungseinheit 21 bzw. 20 vorgesehen. Durch diese Steigungsbegrenzungseinheiten wird jeweils der entsprechende Steigungsfaktor auf den Minimalwert 1 begrenzt, so daß gewährleistet ist, daß sich der Kontrast des Ausgangsbildes nie gegenüber dem Eingangsbild verschlechtern kann. Zudem wird der entsprechende Steigungsfaktor auf den Maximalwert 1,5 beschränkt, um zu starke und damit übernatürliche Kontrastanhebungen zu vermeiden.

Mit Hilfe der zuvor beschriebenen Erfindung kann somit eine deutliche Kontrastverbesserung des Eingangsbildes erzielt werden, ohne den Gesamteindruck zu verschlechtern.

**Patentansprüche**

1. Verfahren zur Kontrastverbesserung eines Bildes, wobei sich das Bild aus einer Vielzahl von Bildpunkten mit jeweils einem bestimmten Helligkeitswert zusammensetzt, umfassend die Schritte

    a) Ermitteln des Werts der mittleren Helligkeit der einzelnen Bildpunkte des Bildes (X),
    b) Verarbeiten der Helligkeitswerte derjenigen Bildpunkte des Bilds (X), die eine geringere Helligkeit als oder eine gleich große Helligkeit wie die mittlere Helligkeit aufweisen, gemäß einer ersten Transformationsfunktion,
    c) Verarbeiten der Helligkeitswerte derjenigen Bildpunkte des Bilds (X), die eine größerer Helligkeit als die mittlere Helligkeit aufweisen, gemäß einer zweiten Transformationsfunktion, und
    d) Ausgeben der Bildpunkte mit den in den Schritten b) bzw. c) verarbeiteten Helligkeitswerten in Form eines transformierten Ausgangsbildes (Y),

    **dadurch gekennzeichnet,**
    **daß** im Schritt b) als die erste Transformationsfunktion eine erste Geradenfunktion mit einem variablen Steigungsfaktor und im Schritt c) als die zweite Transformationsfunktion eine zweite Geradenfunktion mit einem variablen Steigungsfaktor verwendet wird,
    wobei die Steigungsfaktoren der ersten Geradenfunktion und der zweiten Geradenfunktion durch eine Analyse des transformierten Ausgangsbildes (Y) ermittelt werden.

2. Verfahren nach Anspruch 1,
    **dadurch gekennzeichnet,**
    **daß** im Schritt b) als die erste Transformationsfunktion die Funktion $f_L(x_k) = x_m + (x_k-x_m)*a_L$ verwendet wird, und
    **daß** im Schritt c) als die zweite Transformationsfunktion die Funktion $f_U(x_k) = x_m + (x_k-x_m)*a_U$ verwendet wird,
    wobei $x_m$ den im Schritt a) ermittelten mittleren Helligkeitswert, $x_k$ den jeweils zu verarbeitenden Helligkeitswert, $a_L$ den Steigungfaktor der ersten Transformationsfunktion $f_L(x_k)$ und $a_U$ den Steigungsfaktor der zweiten Transformationsfunktion $f_U(x_k)$ bezeichnet.

3. Verfahren nach Anspruch 1 oder 2,
    **dadurch gekennzeichnet,**
    **daß** im Schritt b) die gemäß der ersten Transformationsfunktion verarbeiteten Helligkeitswerte auf einen unteren Grenzwert (YLOW) begrenzt werden, falls sich nach der Verarbeitung gemäß der ersten Transformationsfunktion ein Helligkeitswert kleiner als der untere Grenzwert (YLOW) ergibt, und
    **daß** im Schritt c) die gemäß der zweiten Transformationsfunktion verarbeiteten Helligkeitswerte auf einen oberen Grenzwert (YHIGH) begrenzt werden, falls sich nach der Verarbeitung gemäß der ersten Transformationsfunktion ein Helligkeitswert größer als der obere Grenzwert (YHIGH) ergibt.

4. Verfahren nach einem der vorhergehenden Ansprüche,
    **dadurch gekennzeichnet,**
    **daß** im Schritt a) die mittlere Helligkeit dadurch ermittelt wird, daß die Anzahl der Bildpunkte des Bildes (X) reduziert und zu dem Bild mit den reduzierten Bildpunkten ein quantisiertes Histogramm berechnet wird, aus dem der Wert der mittleren Helligkeit abgeleitet wird.

5. Verfahren nach Anspruch 4,
    **dadurch gekennzeichnet,**
    **daß** die Anzahl der Bildpunkte des Bildes (X) durch eine zweifache Tiefpaßfilterung mit jeweils anschließender Unterabtastung reduziert wird.

6. Verfahren nach Anspruch 5,
    **dadurch gekennzeichnet,**
    **daß** mit jeder Unterabtastung die Anzahl der Bildpunkte um den Faktor 8 reduziert wird.

7. Verfahren nach einem der Ansprüche 4-6,
    **dadurch gekennzeichnet,**
    **daß** der Wert der mittleren Helligkeit anhand des quantisierten Histogramms gemäß der Formel

$$x_m = (q_{max} * \frac{L}{q}) + \frac{L}{2q}$$

berechnet wird,
    wobei $x_m$ den Wert der mittleren Helligkeit, L die Anzahl der möglichen Helligkeitswerte, q die Anzahl der Quantisierungsstufen des quantisierten Histogramms und $q_{max}$ die Nummer der den Maximalwert des quantisierten Histogramms aufweisenden Quantisierungsstufe mit $0 \leq q_{max} \leq q-1$ bezeichnet.

8. Verfahren nach Anspruch 7,
    **dadurch gekennzeichnet,**
    **daß** für den Fall, daß das quantisierte Histogramm mehrere Quantisierungsstufen mit dem Maximalwert aufweist, als Wert für $q_{max}$ der abgerundete Mittelwert der Nummern der den Maximalwert aufweisenden Quantisierungsstufen verwendet wird.

9. Verfahren nach einem der Ansprüche 4-8,
    **dadurch gekennzeichnet,**
    **daß** das quantisierte Histogramm bei 256 möglichen Helligkeitswerten acht Quantisierungsstufen aufweist.

**10.** Verfahren nach einem der Ansprüche 4-9,
**dadurch gekennzeichnet,**
**daß** der somit ermittelte Wert der mittleren Helligkeit ($x_m$(T)) des Bildes (X) mit dem Wert der mittleren Helligkeit des vorhergehenden Bilds ($x_m$(T-1)) verglichen und abhängig von dem Vergleichsergebnis aus einer mehrere diskrete Offsetwerte umfassenden Menge ein Offsetwert (Off) ausgewählt wird, der zu dem Wert der mittleren Helligkeit des vorhergehenden Bildes hinzuaddiert wird, wobei der somit berechnete Summenwert schließlich als Wert der mittleren Helligkeit ($x_m$) für die Schritte b) und c) verwendet wird.

**11.** Verfahren nach Anspruch 10,
**dadurch gekennzeichnet,**
**daß** die Menge die diskreten Offsetwerte -1, 0 und 1 umfaßt.

**12.** Verfahren nach einem der vorhergehenden Ansprüche,
**dadurch gekennzeichnet,**
**daß** die Steigungsfaktoren der ersten Geradenfunktion und der zweiten Geradenfunktion durch eine Analyse der Helligkeitsverteilung des transformierten Ausgangsbilds (Y) ermittelt werden.

**13.** Verfahren nach Anspruch 12,
**dadurch gekennzeichnet,**
**daß** in Abhängigkeit von der Analyse der Helligkeitsverteilung des transformierten Ausgangsbildes (Y) ein Offsetwert ($Off_U$; $Off_L$) für die Steigungsfaktoren der ersten und zweiten Geradenfunktionen erzeugt wird, welcher zu den für das vorhergehende Bild (X) ermittelten Steigungsfaktoren hinzuaddiert wird, um die Steigungsfaktoren für die Verarbeitung des augenblicklichen Bilds (X) gemäß den Schritten b) und c) zu erhalten.

**14.** Verfahren nach Anspruch 13,
**dadurch gekennzeichnet,**
**daß** als Offsetwert ($Off_U$; $Off_L$) abhängig von der Analyse des Ausgangsbildes wahlweise ein Wert -OFFSET, 0 oder +OFFSET verwendet wird, wobei OFFSET den Betrag des Offsetwerts ($Off_U$; $Off_L$) bezeichnet.

**15.** Verfahren nach Anspruch 14,
**dadurch gekennzeichnet,**
**daß** gilt OFFSET = 1/128.

**16.** Verfahren nach Anspruch 14 oder 15,
**dadurch gekennzeichnet,**
**daß** zur Analyse der Helligkeitsverteilung des transformierten Ausgangsbilds (Y) eine erste Anzahl ($N_B$) von darin enthaltenen Bildpunkten ermittelt wird, welche einen kleineren Helligkeitswert als oder einen gleich großen Helligkeitswert wie ein unterer Grenzwert (BLACK_TH) besitzen, **daß** eine zweite Anzahl ($N_W$) von in dem transformierten Ausgangsbild (Y) enthaltenen Bildpunkten ermittelt wird, welche einen größeren Helligkeitswert als oder einen gleich großen Helligkeitswert wie ein oberer Grenzwert (WHITE_TH) besitzen, und
**daß** sowohl die erste Anzahl von Bildpunkten ($N_B$) als auch die zweite Anzahl von Bildpunkten ($N_W$) mit entsprechenden weiteren oberen und unteren Grenzwerten (BLACK_LEVEL_U, BLACK_LEVEL_L; WHITE_LEVEL_U, WHITE_LEVEL_L) verglichen werden, um jeweils abhängig von dem Vergleichsergebnis für die Offsetwerte ($Off_U$; $Off_L$) der Steigungsfaktoren den Wert -OFFSET, 0 oder +OFFSET zu wählen.

**17.** Verfahren nach Anspruch 16,
**dadurch gekennzeichnet,**
**daß** für den Offsetwert ($Off_U$; $Off_L$) des Steigungsfaktors der ersten bzw. zweiten Geradenfunktion der Wert -OFFSET gewählt wird, falls die erste bzw. zweite Anzahl von Bildpunkten ($N_B$; $N_W$) größer als der entsprechende weitere obere Grenzwert (BLACK_LEVEL_U; WHITE_LEVEL_U) ist,
**daß** für den Offsetwert ($Off_U$; $Off_L$) des Steigungsfaktors der ersten bzw. zweiten Geradenfunktion der Wert +OFFSET gewählt wird, falls die erste bzw. zweite Anzahl von Bildpunkten ($N_B$; $N_W$) kleiner als der entsprechende weitere untere Grenzwert (BLACK_LEVEL_L; WHITE_LEVEL_L) ist, und
**daß** in allen anderen Fällen für den Steigungsfaktor der ersten bzw. zweiten Geradenfunktion als Offsetwert ($Off_U$; $Off_L$) der Wert 0 gewählt wird.

**18.** Verfahren nach Anspruch 16 oder 17,
**dadurch gekennzeichnet,**
**daß** als unterer Grenzwert (BLACK_TH) 16 und als oberer Grenzwert (WHITE_TH) 240 gewählt wird.

**19.** Verfahren nach einem der vorhergehenden Ansprüche,
**dadurch gekennzeichnet,**
**daß** die Steigungsfaktoren der ersten und zweiten Geradenfunktion jeweils auf einen maximalen Steigungsfaktorwert von 1,5 und einen minimalen Steigungsafaktorwert von 1 begrenzt werden.

**20.** Schaltungsanordnung zur Kontrastverbesserung eines Bildes,
wobei sich das Bild aus einer Vielzahl von Bildpunkten mit jeweils einem bestimmten Helligkeitswert zusammensetzt,
mit einer Mittelwert-Ermittlungseinrichtung (1) zum Ermitteln des Werts der mittleren Helligkeit der einzelnen Bildpunkte des Bildes (X),
mit einer ersten Transformationsfunktion-Ermittlungseinrichtung (2) zum Ermitteln einer ersten Transformationsfunktion, mit der eine erste Menge von Bildpunkten des Bildes (X), welche eine geringere Helligkeit als oder eine gleich große Helligkeit wie die mittlere Helligkeit aufweisen, zu verarbeiten sind,

mit einer zweiten Transformationsfunktion-Ermittlungseinrichtung (3) zum Ermitteln einer zweiten Transformationsfunktion, mit der eine zweite Menge von Bildpunkten des Bildes (X), welche eine größere Helligkeit als die mittlere Helligkeit aufweisen, zu verarbeiten sind, und

mit einer Bildverarbeitungseinrichtung (4) zum Verarbeiten der Helligkeitswerte der ersten Menge von Bildpunkten des Bildes (X) gemäß der ersten Transformationsfunktion sowie der Helligkeitswerte der zweiten Menge von Bildpunkten des Bildes (X) gemäß der zweiten Transformationsfunktion und zum Ausgeben der verarbeiteten Bildpunkte in Form eines transformierten Ausgangsbilds (Y),

**dadurch gekennzeichnet,**

**daß** die erste Transformationsfunktion-Ermittlungseinrichtung (2) bzw. die zweite Transformationsfunktion-Ermittlungseinrichtung (3) derart ausgestaltet ist, daß sie jeweils durch eine Analyse des transformierten Ausgangsbildes (Y) als die erste bzw. zweite Transformationsfunktion eine erste bzw. zweite Geradenfunktion mit einem variablen Steigungsfaktor ermittelt.

21. Schaltungsanordnung nach Anspruch 20,
**dadurch gekennzeichnet,**
**daß** die erste Transformationsfunktion-Ermittlungseinrichtung (2) als die erste Transformationsfunktion die Funktion $f_L(x_k) = x_m + (x_k-x_m)*a_L$ ermittelt, und

**daß** die zweite Transformationsfunktion-Ermittlungseinrichtung (3) als die zweite Transformationsfunktion die Funktion $f_U(x_k) = x_m + (x_k-x_m)*a_U$ ermittelt,

wobei $x_m$ den von der Mittelwert-Ermittlungseinrichtung (1) ermittelten mittleren Helligkeitswert, $x_k$ den jeweils zu verarbeitenden Helligkeitswert, $a_L$ den Steigungfaktor der ersten Transformationsfunktion $f_L(x_k)$ und $a_U$ den Steigungsfaktor der zweiten Transformationsfunktion $f_U(x_k)$ bezeichnet.

22. Schaltungsanordnung nach Anspruch 20 oder 21,
**dadurch gekennzeichnet,**
**daß** die Mittelwert-Ermittlungseinrichtung (1) Unterabtastungsmittel (6, 8) umfaßt, um die Anzahl der Bildpunkte des Bildes (X) zu reduzieren, und
**daß** die Mittelwert-Ermittlungseinrichtung (1) eine Mittelwert-Berechnungseinheit (9) zur Berechnung eines quantisierten Histogramms des Bildes mit den reduzierten Bildpunkten und zur Ermittlung des Werts der mittleren Helligkeit gemäß der Formel

$$x_m = (q_{max} * \frac{L}{q}) + \frac{L}{2q}$$

umfassen,

wobei $x_m$ den Wert der mittleren Helligkeit, L die Anzahl der möglichen Helligkeitswerte, q die Anzahl der Quantisierungsstufen des quantisierten Histogramms und $q_{max}$ die Nummer der den Maximalwert des quantisierten Histogramms aufweisenden Quantisierungsstufe mit $0 \leq q_{max} \leq q-1$ bezeichnet.

23. Schaltungsanordnung nach Anspruch 22,
**dadurch gekennzeichnet,**
**daß** die Mittelwert-Berechnungseinheit (9) für den Fall, daß das quantisierte Histogramm mehrere Quantisierungsstufen mit dem Maximalwert aufweist, als Wert für $q_{max}$ den abgerundeten Mittelwert der Nummern der den Maximalwert aufweisenden Quantisierungsstufen verwendet.

24. Schaltungsanordnung nach Anspruch 23 oder 24,
**dadurch gekennzeichnet,**
**daß** die Mittelwert-Ermittlungseinrichtung (1) eine Offsetberechnungseinheit (10) umfaßt, welche den von der Mittelwert-Berechnungseinheit (9) ermittelte Wert der mittleren Helligkeit ($x_m(T)$) des Bildes (X) mit dem Wert der mittleren Helligkeit des vorhergehenden Bildes ($x_m(T-1)$) vergleicht und abhängig von dem Vergleichsergebnis aus einer mehrere diskrete Offsetwerte umfassenden Menge einen Offsetwert (Off) auswählt und zu dem Wert der mittleren Helligkeit des vorhergehenden Bildes hinzuaddiert, wobei der somit berechnete Summenwert schließlich als Wert der mittleren Helligkeit ($x_m$) der ersten und zweiten Transformationsfunktion-Ermittlungseinrichtung (2, 3) zugeführt ist.

25. Schaltungsanordnung nach einem der Ansprüche 20-24,
**dadurch gekennzeichnet,**
**daß** der ersten Transformationsfunktion-Ermittlungseinrichtung (2) eine Bildpunktanzahl-Ermittlungseinrichtung (13) zugeordnet ist, welche eine erste Anzahl ($N_B$) von in dem transformierten Ausgangsbild (Y) enthaltenen Bildpunkten ermittelt, die einen kleineren Helligkeitswert als oder einen gleich großen Helligkeitswert wie ein unterer Grenzwert (BLACK_TH) besitzen,

**daß** der zweiten Transformationsfunktion-Ermittlungseinrichtung (3) eine Bildpunktanzahl-Ermittlungseinrichtung (13) zugeordnet ist, welche eine zweite Anzahl ($N_W$) von in dem transformierten Ausgangsbild (Y) enthaltenen Bildpunkten ermittelt, die einen größeren Helligkeitswert als oder einen gleich großen Helligkeitswert wie ein oberer Grenzwert (WHITE_TH) besitzen,

**daß** die erste und zweite Transformationsfunktion-Ermittlungseinrichtung (2, 3) Offsetwert-Ermittlungsmittel (16, 17) umfassen, welche die erste Anzahl von Bildpunkten ($N_B$) bzw. die zweite Anzahl von Bildpunkten ($N_W$) mit entsprechenden weiteren Grenzwerten (BLACK_LEVEL_U, BLACK_LEVEL_L; WHITE_LEVEL_U, WHITE_LEVEL_L) vergleichen, um jeweils abhängig von dem Vergleichsergebnis einen ersten bzw. zweiten Offsetwert ($Off_U$; $Off_L$) für den Steigungsfaktor der ersten bzw. zweiten Geradenfunktion zu ermitteln, und **daß** die erste und zweite Transformationsfunktion-Ermittlungseinrichtung (2, 3) jeweils Addiermittel (29, 30) zum Hinzuaddieren des ersten bzw. zweiten Offsetwerts zu dem für das vorhergehende Bild (X) ermittelten entsprechenden Steigungsfaktor umfassen, um somit den Steigungsfaktor für das augenblicklich zu verarbeitende Bild (X) der ersten und zweiten Geradenfunktion zu erhalten.

26. Schaltungsanordnung nach Anspruch 25,
**dadurch gekennzeichnet,**
**daß** die Offsetwert-Ermittlungsmittel (16, 17) abhängig von dem Vergleichsergebnis als Offsetwert jeweils wahlweise den Wert -OFFSET, 0 oder +OFFSET wählen.

27. Schaltungsanordnung nach Anspruch 26,
**dadurch gekennzeichnet,**
**daß** gilt OFFSET = 1/128.

28. Schaltungsanordnung nach einem der Ansprüche 20-27,
**dadurch gekennzeichnet,**
**daß** die erste und zweite Transformationsfunktion-Ermittlungseinrichtung (2, 3) jeweils Steigungsfaktor-Begrenzungsmittel (20, 21) zum Begrenzen des ermittelten Steigungsfaktors der ersten bzw. zweiten Geradenfunktion auf einen maximalen Steigungsfaktorwert von 1,5 und einen minimalen Steigungsafaktorwert von 1 umfassen.

**Claims**

1. A method for enhancing the contrast of an image, the image being composed of a multiplicity of pixels each having a specific brightness value, comprising the steps of

    a) determining the value of the mean brightness of the individual pixels of the image (X),
    b) processing the brightness values of those pixels of the image (X) which have a brightness less than or equal to the mean brightness, in accordance with a first transformation function,
    c) processing the brightness values of those pixels of the image (X) which have a brightness greater than the mean brightness, in accordance with a second transformation function, and

    d) outputting the pixels having the brightness values processed in steps b) and c), respectively, in the form of a transformed output image (Y),

**characterized**
**in that** a first straight-line function having a variable slope factor is used as the first transformation function in step b) and a second straight-line function having a variable slope factor is used as the second transformation function in step c), the slope factors of the first straight-line function and of the second straight-line function being determined by an analysis of the transformed output image (Y).

2. The method as claimed in claim 1,
**characterized**
**in that** the function $f_L(x_k) = x_m + (x_k - x_m)^* a_L$ is used as the first transformation function in step b), and
**in that** the function $f_U(x_k) = x_m + (x_k - x_m)^* a_U$ is used as the second transformation function in step c), where $x_m$ denotes the mean brightness value determined in step a), $x_k$ denotes the respective brightness value to be processed, $a_L$ denotes the slope factor of the first transformation function $f_L(x_k)$ and $a_U$ denotes the slope factor of the second transformation function $f_U(x_k)$.

3. The method as claimed in claim 1 or 2,
**characterized**
**in that**, in step b), the brightness values processed in accordance with the first transformation function are limited to a lower limit value (YLOW) if a brightness value less than the lower limit value (YLOW) results after the processing in accordance with the first transformation function, and
**in that**, in step c), the brightness values processed in accordance with the second transformation function are limited to an upper limit value (YHIGH) if a brightness value greater than the upper limit value (YHIGH) results after the processing in accordance with the first transformation function.

4. The method as claimed in one of the preceding claims,
**characterized**
**in that**, in step a), the mean brightness is determined by reducing the number of pixels of the image (X) and calculating a quantized histogram for the image with the reduced pixels, from which histogram the value of the mean brightness is derived.

5. The method as claimed in claim 4,
**characterized**
**in that** the number of pixels of the image (X) is reduced by double low-pass filtering in each case with subsequent subsampling.

6. The method as claimed in claim 5, **characterized in that**, with each subsampling, the number of pixels is reduced by the factor 8.

7. The method as claimed in one of claims 4-6, **characterized in that** the value of the mean brightness is calculated using the quantized histogram in accordance with the formula

$$x_m = (q_{max} * \frac{L}{q}) + \frac{L}{2q}$$

where $x_m$ denotes the value of the mean brightness, L denotes the number of possible brightness values, q denotes the number of quantization levels of the quantized histogram and $q_{max}$ denotes the number of the quantization level having the maximum value of the quantized histogram, where $0 \leq q_{max} \leq q\text{-}1$.

8. The method as claimed in claim 7, **characterized in that**, for the case where the quantized histogram has a plurality of quantization levels having the maximum value, the rounded-down mean value of the numbers of the quantization levels having the maximum value is used as a value for $q_{max}$.

9. The method as claimed in one of claims 4-8, **characterized in that** the quantized histogram has eight quantization levels for 256 possible brightness values.

10. The method as claimed in one of claims 4-9, **characterized in that** the value, determined in this way, of the mean brightness ($x_m(T)$) of the image (X) is compared with the value of the mean brightness of the preceding image ($x_m(T\text{-}1)$) and, depending on the comparison result, an offset value (Off) is selected from a set comprising a plurality of discrete offset values and is added to the value of the mean brightness of the preceding image, the cumulative value thus calculated finally being used as the value of the mean brightness ($x_m$) for steps b) and c).

11. The method as claimed in claim 10, **characterized in that** the step comprises the discrete offset values -1, 0 and 1.

12. The method as claimed in one of the preceding claims, **characterized**

**in that** the slope factors of the first straight-line function and of the second straight-line function are determined by an analysis of the brightness distribution of the transformed output image (Y).

13. The method as claimed in claim 12, **characterized in that**, as a function of the analysis of the brightness distribution of the transformed output image (Y), an offset value ($Off_U$; $Off_L$) is produced for the slope factors of the first and second straight-line functions and is added to the slope factors determined for the preceding image (X), in order to obtain the slope factors for the processing of the instantaneous image (X) in accordance with steps b) and c).

14. The method as claimed in claim 13, **characterized in that** a value -OFFSET, 0 or +OFFSET is optionally used as the offset value ($Off_U$; $Off_L$), depending on the analysis of the output image, where OFFSET denotes the magnitude of the offset value ($Off_U$; $Off_L$).

15. The method as claimed in claim 14, **characterized in that** OFFSET = 1/128 holds true.

16. The method as claimed in claim 14 or 15, **characterized in that**, for the analysis of the brightness distribution of the transformed output image (Y), a first number ($N_B$) of pixels contained therein is determined, which pixels have a brightness value less than or equal to a lower limit value (BLACK_TH), **in that** a second number ($N_W$) of pixels contained in the transformed output image (Y) is determined, which pixels have a brightness value greater than or equal to an upper limit value (WHITE_TH), and **in that** both the first number of pixels ($N_B$) and the second number of pixels ($N_W$) are compared with corresponding further upper and lower limit values (BLACK_LEVEL_U, BLACK_LEVEL_L; WHITE_LEVEL_U, WHITE_LEVEL_L), in order to choose the value - OFFSET, 0 or +OFFSET in each case depending on the comparison result for the offset values ($Off_U$; $Off_L$) of the slope factors.

17. The method as claimed in claim 16, **characterized in that** the value -OFFSET is chosen for the offset value ($Off_U$; $Off_L$) of the slope factor of the first and second straight-line function, respectively, if the first and second number of pixels ($N_B$; $N_W$), respectively, is greater than the corresponding further upper limit value (BLACK_LEVEL_U; WHITE_LEVEL_U), **in that** the value +OFFSET is chosen for the offset value ($Off_U$; $Off_L$) of the slope factor of the first and second straight-line function, respectively, if the first and second number of pixels ($N_B$; $N_W$), respectively, is less than the corresponding further lower limit value (BLACK_LEVEL_L; WHITE_LEVEL_L) and
**in that**, in all other cases, the value 0 is chosen as offset value (Off$_U$; Off$_L$) for the slope factor of the first and second straight-line function, respectively.

18. The method as claimed in claim 16 or 17,
**characterized**
**in that** 16 is chosen as the lower limit value (BLACK_TH) and 240 is chosen as the upper limit value (WHITE_TH).

19. The method as claimed in one of the preceding claims,
**characterized**
**in that** the slope factors of the first and second straight-line function are in each case limited to a maximum slope factor value of 1.5 and a minimum slope factor value of 1.

20. A circuit arrangement for enhancing the contrast of an image,
the image being composed of a multiplicity of pixels each having a specific brightness value,
having a mean value determining device (1) for determining the value of the mean brightness of the individual pixels of the image (X),
having a first transformation function determining device (2) for determining a first transformation function with which a first set of pixels of the image (X), which have a brightness less than or equal to the mean brightness, are to be processed, having a second transformation function determining device (3) for determining a second transformation function with which a second set of pixels of the image (X), which have a brightness greater than the mean brightness, are to be processed, and
having an image processing device (4) for processing the brightness values of the first set of pixels of the image (X) in accordance with the first transformation function and also the brightness values of the second set of pixels of the image (X) in accordance with the second transformation function and for outputting the processed pixels in the form of a transformed output image (Y),
**characterized**
**in that** the first transformation function determining device (2) and the second transformation function determining device (3), respectively, is configured in such a way that it determines, in each case by an analysis of the transformed output image (Y), a first and second straight-line function, respectively, having a variable slope factor as the first and second transformation function, respectively.

21. The circuit arrangement as claimed in claim 20,

**characterized**
**in that** the first transformation function determining device (2) determines the function $f_L(x_k) = x_m + (x_k-x_m)^*a_L$ as the first transformation function, and
**in that** the second transformation function determining device (3) determines the function $f_U(x_k) = x_m + (x_k-x_m)^*a_U$ as the second transformation function,
where $x_m$ denotes the mean brightness value determined by the mean value determining device (1), $x_k$ denotes the respective brightness value to be processed, $a_L$ denotes the slope factor of the first transformation function $f_L(x_k)$ and $a_U$ denotes the slope factor of the second transformation function $f_U(x_k)$.

22. The circuit arrangement as claimed in claim 20 or 21,
**characterized**
**in that** the mean value determining device (1) comprises subsampling means (6, 8), in order to reduce the number of pixels of the image (X), and
**in that** the mean value determining device (1) comprises a mean value calculating unit (9) for calculating a quantized histogram of the image having the reduced pixels and for determining the value of the mean brightness in accordance with the formula

$$x_m = (q_{max} {}^* \frac{L}{q} + \frac{L}{2q}$$

where $x_m$ denotes the value of the mean brightness, L denotes the number of possible brightness values, q denotes the number of quantization levels of the quantized histogram and $q_{max}$ denotes the number of the quantization level having the maximum value of the quantized histogram, where $0 \leq q_{max} \leq q^{-1}$.

23. The circuit arrangement as claimed in claim 22,
**characterized**
**in that**, for the case where the quantized histogram has a plurality of quantization levels with the maximum value, the mean value calculating unit (9) uses the rounded-down mean value of the numbers of the quantization levels having the maximum value as a value for $q_{max}$.

24. The circuit arrangement as claimed in claim 23 or 24,
**characterized**
**in that** the mean value determining device (1) comprises an offset calculating unit (10), which compares the value of the mean brightness ($x_m(T)$) of the image (X), said value being determined by the mean value calculating unit (9), with the value of the mean brightness of the preceding image ($x_m(T-1)$) and, depending on the comparison result, selects an offset value (Off) from a set comprising a plurality of discrete offset values and adds it to the value of the mean brightness of the preceding image, the cumulative value thus calculated finally being fed as value of the mean brightness $(x_m)$ to the first and second transformation function determining devices (2, 3).

**25.** The circuit arrangement as claimed in one of claims 20-24,
**characterized**
**in that** the first transformation function determining device (2) is assigned a pixel number determining device (13), which determines a first number $(N_B)$ of pixels contained in the transformed output image (Y), which pixels have a brightness value less than or equal to a lower limit value (BLACK_TH),
**in that** the second transformation function determining device (3) is assigned a pixel number determining device (13), which determines a second number $(N_W)$ of pixels contained in the transformed output image (Y), which pixels have a brightness value greater than or equal to an upper limit value (WHITE_TH),
**in that** the first and second transformation function determining devices (2, 3) comprise offset value determining means (16, 17), which compare the first number of pixels $(N_B)$ and the second number of pixels $(N_W)$, respectively, with corresponding further limit values (BLACK_LEVEL_U, BLACK_LEVEL_L; WHITE LEVEL_U, WHITE_LEVEL_L), in order to determine, in each case depending on the comparison result, a first and second offset value $(Off_U; Off_L)$, respectively, for the slope factor of the first and second straight-line function, respectively, and
**in that** the first and second transformation function determining devices (2, 3) each comprise addition means (29, 30) for adding the first and second offset value, respectively, to the corresponding slope factor determined for the preceding image (X), in order thus to obtain the slope factor for the image (X) of the first and second straight-line function that is to be presently processed.

**26.** The circuit arrangement as claimed in claim 25,
**characterized**
**in that** the offset value determining means (16, 17) each optionally choose the value -OFFSET, 0 or +OFFSET as the offset value, depending on the comparison result.

**27.** The circuit arrangement as claimed in claim 26,
**characterized**
**in that** OFFSET = 1/128 holds true.

**28.** The circuit arrangement as claimed in one of claims 20-27,

**characterized**
**in that** the first and second transformation function determining devices (2, 3) each comprise slope factor limiting means (20, 21) for limiting the determined slope factor of the first and second straight-line function, respectively, to a maximum slope factor value of 1.5 and a minimum slope factor value of 1.

## Revendications

**1.** Procédé pour améliorer le contraste d'une image, selon lequel l'image se compose d'une multiplicité de points d'image comportant chacun une valeur de luminosité déterminée, comprenant les étapes consistant à:

a) déterminer la valeur de la luminosité moyenne des différents points de l'image (X),
b) traiter les valeurs de luminosité des points de l'image (X), qui possèdent une luminosité inférieure ou égale à la luminosité moyenne, conformément à une première fonction de transformation,
c) traiter les valeurs de luminosité des points de l'image (X), qui possèdent une luminosité supérieure à la luminosité moyenne, conformément à une seconde fonction de transformation, et
d) délivrer les points d'image avec les valeurs de luminosité traitées lors des étapes b) et c) sous la forme d'une image de sortie transformée (Y),

**caractérisé en ce**
**que** lors de l'étape b) on utilise en tant que première fonction de transformation une première fonction de droite comportant un facteur de pente variable et lors de l'étape c) on utilise comme seconde fonction de transformation une seconde fonction de droite possédant un facteur de pente variable, les facteurs de pente de la première fonction de droite et de la seconde fonction de droite étant déterminés par une analyse de l'image de sortie (Y).

**2.** Procédé selon la revendication 1, **caractérisé en ce**
**que** lors de l'étape b) on utilise comme première fonction de transformation la fonction $f_L(x_k) = x_m + (x_k-x_m)^*a_L$, et
**que** lors de l'étape c) on utilise comme seconde fonction de transformation la fonction $f_U(x_k) = x_m + (x_k-x_m)^*a_U$, $x_m$ représentant la valeur de luminosité moyenne déterminée lors de l'étape a), $x_k$ représentant la valeur de luminosité devant être respectivement traitée, $a_L$ le facteur de pente de la première fonction de transformation $f_L(x_k)$ et $a_U$ le facteur de pente de la seconde fonction de transformation $f_U(x_k)$.

**3.** Procédé selon la revendication 1 ou 2, **caractérisé en ce que** lors de l'étape b) les valeurs de luminosité traitées conformément à la première fonction de transformation sont limitées à une valeur limite inférieure (YLOW), dans le cas où après le traitement conformément à la première fonction de transformation on obtient une valeur de luminosité est inférieure à la valeur limite inférieure (YLOW), et **que** lors de l'étape c), les valeurs de luminosité traitées conformément à la seconde fonction de transformation sont limitées à une valeur limite supérieure (YHIGH), dans le cas où après le traitement conformément à la première fonction de transformation, on obtient une valeur de luminosité supérieure à la valeur limite supérieure (YHIGH).

**4.** Procédé selon l'une des revendications précédentes, **caractérisé en ce que** lors de l'étape a) la luminosité moyenne est déterminée par le fait que le nombre des points de l'image (X) est réduit et pour l'image comportant les points d'image réduits, un histogramme quantifié, à partir duquel est dérivée la valeur de la luminosité moyenne, est calculé.

**5.** Procédé selon la revendication 4, **caractérisé en ce que** le nombre des points d'image (X) est réduit au moyen d'un filtrage passe-bas double, qui est suivi par un sous-échantillonnage.

**6.** Procédé selon la revendication 5, **caractérisé en ce que** le nombre des points d'image est réduit du facteur 8 avec chaque sous-échantillonnage.

**7.** Procédé selon l'une des revendications 4 à 6, **caractérisé en ce que** la valeur de la luminosité moyenne est calculée en fonction de l'histogramme quantifié conformément à la formule

$$x_m = \left(q_{max} * \frac{L}{q}\right) + \frac{L}{2q}$$

$x_m$ désignant la valeur de la luminosité moyenne, L le nombre des valeurs de luminosité possibles, q le nombre des étages de quantification de l'histogramme quantifié et $q_{max}$ le numéro de l'étage de quantification possédant la valeur maximale de l'histogramme quantifié, avec $0 \le q_{max} \le q-1$.

**8.** Procédé selon la revendication 7, **caractérisé en ce que** dans le cas où l'histogramme quantifié comporte plusieurs étages de quantification avec la valeur maximale, on utilise en tant que valeur pour $q_{max}$ la valeur moyenne arrondie des numéros des étages de quantification possédant la valeur maximale.

**9.** Procédé selon l'une des revendications 4 à 8, **caractérisé en ce que** l'histogramme quantifié possède huit étages de quantification pour 256 valeurs de luminosité possibles.

**10.** Procédé selon l'une des revendications 4 à 9, **caractérisé en ce que** la valeur ainsi déterminée de la luminosité moyenne $(x_m(T))$ de l'image (X) est comparée à la valeur de luminosité moyenne de l'image précédente $(x_m(T-1))$ et qu'en fonction du résultat de la comparaison une valeur d'offset (Off), qui est ajoutée à la valeur de la luminosité moyenne de l'image précédente, est sélectionnée à partir d'une quantité comprenant plusieurs valeurs d'offset discrètes, la valeur somme calculée ainsi étant utilisée ensuite en tant que valeur de la luminosité moyenne $(x_m)$ pour les étapes b) et c).

**11.** Procédé selon la revendication 10, **caractérisé en ce que** la quantité des valeurs d'offset discrètes comprend -1, 0 et 1.

**12.** Procédé selon l'une des revendications précédentes, **caractérisé en ce que** les facteurs de pente de la première fonction de droite et de la seconde fonction de gauche sont déterminés par une analyse de la distribution de luminosité de l'image de sortie transformée (Y).

**13.** Procédé selon la revendication 12, **caractérisé en ce qu'**une valeur de décalage d'offset $(Off_U; Off_L)$ pour les facteurs de pente des première et seconde fonctions de droite, est produite en fonction de l'analyse de la distribution de la luminosité de l'image de sortie transformée (Y), cette valeur d'offset étant ajoutée aux facteurs de pente qui sont déterminés pour l'image précédente (X), pour l'obtention des facteurs de pente pour le traitement de l'image instantanée (X) conformément aux étapes b) et c).

**14.** Procédé selon la revendication 13, **caractérisé en ce qu'**on utilise comme valeur d'offset $(Off_U; Off_L)$ en fonction de l'analyse de l'image de sortie au choix à une valeur -OFFSET, 0 ou +OFFSET, OFFSET désignant la valeur absolue de la valeur d'offset $(Off_U; Off_L)$.

**15.** Procédé selon la revendication 14, **caractérisé en ce qu'**on a OFFSET = 1/128.

**16.** Procédé selon la revendication 14 ou 15, **caractérisé en ce que** pour l'analyse de la distribution de luminosité de l'image de sortie transformée (Y) on détermine un premier nombre $(N_B)$ de points d'image, qui sont contenus dans l'image et qui possèdent une valeur de luminosité inférieure ou égale à une valeur limite inférieure (BLACK_TH),

**qu'**on détermine un second nombre ($N_W$) de points d'image contenus dans l'image de sortie transformée (Y), qui possèdent une valeur de luminosité supérieure ou égale à une valeur limite supérieure (WHITE_TH), et

**qu'**aussi bien le premier nombre de points d'image ($N_B$) que le second nombre de points d'image ($N_W$) sont comparés à d'autres valeurs limites supérieure et inférieure correspondantes (BLACK_LEVEL_U, BLACK_LEVEL_L; WHITE_LEVEL_U, WHITE_LEVEL_L), pour choisir la valeur -OFFSET, 0 ou +OFFSET respectivement en fonction du résultat de la comparaison pour les valeurs d'offset ($Off_U$; $Off_L$) des facteurs de pente.

17. Procédé selon la revendication 16, **caractérisé en ce que** pour la valeur d'offset ($Off_U$; $Off_L$) du facteur de pente de la première ou de la seconde fonction de droite, on choisit la valeur -OFFSET, dans le cas où le premier ou le second nombre de points d'image ($N_B$; $N_W$) est supérieur à l'autre valeur limite correspondante (BLACK_LEVEL_U; WHITE_LEVEL_U),

que pour la valeur de décalage ($Off_U$; $Off_L$) du facteur de pente de la première ou de la seconde fonction de droite on choisit la valeur +OFFSET, dans le cas où le premier ou le second nombre de points d'image ($N_B$; $N_W$) est inférieur à l'autre valeur limite inférieure correspondante (BLACK_LEVEL_L; WHITE_LEVEL_L), et

que dans tous les autres cas pour le facteur de pente de la première ou de la seconde fonction de droite on choisit comme valeur de décalage ($Off_U$; $Off_L$) la valeur 0.

18. Procédé selon la revendication 16 ou 17, **caractérisé en ce qu'**on choisit comme 16 valeur limite inférieure (BLACK_TH) et 240 comme valeur limite supérieure (WHITE_TH).

19. Procédé selon l'une des revendications précédentes, **caractérisé en ce que** les valeurs de pente des première et seconde fonctions de droite sont limitées respectivement à une valeur maximale du facteur de pente égale à 1,5 et à une valeur minimale du facteur de pente égale à 1.

20. Montage pour l'amélioration du contraste d'une image,

dans lequel l'image se compose d'une multiplicité de points d'image comportant respectivement une valeur de luminosité déterminée,

comportant un dispositif (1) de détermination de la valeur moyenne servant à déterminer la valeur de la luminosité moyenne des différents points de l'image (X),

comportant un premier dispositif (2) de détermination d'une fonction de transformation servant à déterminer une première fonction de transformation, avec laquelle une première quantité de points d'image de l'image (X), qui possèdent une luminosité inférieure ou égale à la luminosité moyenne, doit être traitée,

comportant un second dispositif (3) de détermination d'une fonction de transformation pour déterminer une seconde fonction de transformation, avec laquelle une seconde quantité de points de l'image (X) qui possèdent une luminosité supérieure à la luminosité moyenne, doit être traitée; et

comportant un dispositif de traitement (4) de traitement d'image servant à traiter les valeurs de luminosité de la première quantité de points de l'image (X) conformément à la première fonction de transformation ainsi que les valeurs de luminosité de la seconde quantité de points de l'image (X) conformément à la seconde fonction de transformation et servant à délivrer les points d'image traités sous la forme d'une image de sortie transformée (Y),

**caractérisé en ce**

**que** le premier dispositif (2) de détermination d'une fonction de transformation ou le second dispositif (3) de détermination d'une fonction de transformation est agencé de telle sorte qu'il détermine respectivement au moyen d'une analyse de l'image de sortie transformée (Y) en tant que première ou seconde fonction de transformation une première ou seconde fonction de droite possédant une facteur de pente variable.

21. Montage selon la revendication 20, **caractérisé en ce**

**que** le premier dispositif (2) de détermination d'une fonction de transformation détermine en tant que première fonction de transformation la fonction $f_L$ $(x_k) = x_m + (x_k - x_m)^* a_L$, et

**que** le second dispositif (3) de détermination d'une fonction de transformation détermine en tant que seconde fonction de transformation la fonction $f_U$ $(x_k) = x_m + (x_k - x_m)^* a_U$,

$x_m$ représentant la valeur de luminosité moyenne déterminée lors de l'étape 1), $x_k$ la valeur de luminosité devant être respectivement traitée, $a_L$ le facteur de pente de la première fonction de transformation $f_L(x_k)$ et $a_U$ le facteur de pente de la seconde fonction de transformation $f_U(x_k)$.

22. Montage selon la revendication 20 ou 21, **caractérisé en ce que** le dispositif (1) de détermination de la valeur moyenne comprend des moyens de sous-échantillonnage (6, 8) pour réduire le nombre de points de l'image (X), et

que le dispositif (1) de détermination d'une valeur moyenne comporte une unité (9) de calcul de valeur moyenne pour calculer un histogramme quantifié de l'image avec les points d'image réduit pour déterminer la valeur de la luminosité moyenne conformément à la formule

$$x_m = (q_{max} * \frac{L}{q}) + \frac{L}{2q}$$

$x_m$ étant la valeur de la luminosité moyenne, L le nombre des valeurs de luminosité possibles, q le nombre des étages de quantification de l'histogramme quantifié et $q_{max}$ le numéro de l'étage de quantification possédant la valeur maximale de l'histogramme quantifié, avec $0 \le q_{max} \le q$-1.

23. Montage selon la revendication 22, **caractérisé en ce que** dans le cas où l'histogramme quantifié comporte plusieurs étages de quantification avec la valeur maximale, l'unité (9) de calcul de la valeur moyenne utilise, en tant que valeur pour $q_{max}$, la valeur moyenne arrondie des numéros des étages de quantification possédant la valeur maximale.

24. Montage selon la revendication 23 ou 24, **caractérisé en ce que** le dispositif (1) de détermination de la valeur moyenne comprend une unité de calcul d'offset (10), qui compare la valeur, déterminée par l'unité (9) de calcul de la valeur moyenne, de la luminosité moyenne ($x_m(T)$) de l'image (X) à la valeur de luminosité moyenne de l'image précédente ($x_m$(T-1)) et sélectionne une valeur d'offset (Off) en fonction du résultat de la comparaison à partir d'une quantité comprenant plusieurs valeurs d'offset discrètes, et l'ajoute à la valeur de la luminosité moyenne de l'image précédente, la valeur somme ainsi calculée étant envoyée finalement en tant que valeur de la luminosité moyenne ($x_m$) aux premier et second dispositifs (2, 3) de détermination d'une fonction de transformation.

25. Montage selon l'une des revendications 20 à 24, **caractérisé en ce**
**qu'**au premier dispositif (2) de détermination de la fonction de transformation est associé un dispositif (13) de détermination du nombre de points d'image, qui détermine un premier nombre ($N_B$) de points d'image, qui sont contenus dans l'image de sortie transformée (Y) et qui possèdent une valeur de luminosité inférieure ou égale à une valeur limite inférieure (BLACK_TH),
**qu'**au second dispositif (3) de détermination d'une fonction de transformation est associé un dispositif (13) de détermination du nombre de points d'image, qui détermine un second nombre ($N_W$) de points d'image contenus dans l'image de sortie transformée (Y), qui possèdent une valeur de luminosité supérieure ou égale à une valeur limite supérieure (WHITE_TH),
**que** les premier et second dispositifs (2, 3) de détermination d'une fonction de transformation comprennent des moyens (16, 17) de détermination d'une valeur d'offset qui comparent le premier nombre de points d'image ($N_B$) ou le second nombre de points d'image ($N_W$) à d'autres valeurs limites correspondantes (BLACK_LEVEL_U, BLACK_LEVEL_L; WHITE_LEVEL_U, WHITE_LEVEL_L), de manière à déterminer respectivement en fonction de résultat de la comparaison une première ou une seconde valeur d'offset ($Off_U$; $Off_L$) pour le facteur de pente de la première ou de la seconde fonction de droite, et
**que** les premier et second dispositifs (2, 3) de détermination d'une fonction de transformation comprennent respectivement des moyens d'addition (29, 30) pour ajouter la première ou la seconde valeur d'offset au facteur de pente correspondant déterminé par l'image précédente (X), de manière à obtenir ainsi le facteur de pente pour l'image (X) devant être traitée instantanément, des première et seconde fonctions de droite.

26. Montage selon la revendication 25, **caractérisé en ce que** les moyens (16, 17) de détermination de la valeur d'offset choisissent en tant que valeur d'offset respectivement au choix la valeur -OFFSET, 0 ou +OFFSET en fonction du résultat de la comparaison.

27. Montage selon la revendication 26, **caractérisé en ce que** l'on a OFFSET = 1/128.

28. Montage selon l'une des revendications 20 à 27, **caractérisé en ce que** les premier et second dispositifs (2, 3) de détermination d'une fonction de transformation comprennent respectivement des moyens (20, 21) de limitation du facteur de pente pour limiter le facteur de pente déterminé de la première ou de la seconde fonction de droite à une valeur maximale du facteur de pente égale à 1,5 et à une valeur minimale du facteur de pente égale à 1.

# FIG 1

X ⟶ | Mittelwert-berechnung | ⟶ $x_m$

1

Mapper ⟶ Y

4

2 ⟶ $f_L(x_k)$   $f_U(x_k)$ ⟶ 3

# FIG 2

y

255

YHIGH

$f_U(x_k)$

bu

$a_U = bu/au$

au

$x_m$

$f_L(x_k)$

bl   $a_L = bl/al$

YLOW

al

0

0   $x_m$   255   $x_k$

FIG 3

# FIG 4A

$x_m(T) = 80$

$x_m(T) = q_{max} * 32 + 16$

# FIG 4B

$x_m(T) = 112$

$x_m(T) = INT\left(\dfrac{q_{max1} + q_{max2}}{2}\right) * 32 + 16$

FIG 5

EP 1 197 067 B1

# FIG 6A
## (STAND DER TECHNIK)

$P(x_k)$

0

0             255   $x_k$

# FIG 6B
## (STAND DER TECHNIK)

$P(x_k)$

0

0             255   $x_k$

# FIG 7

## (STAND DER TECHNIK)